# EUROPEAN PATENT SPECIFICATION

(11) **EP 2 269 868 B1**
(45) Date of publication and mention of the grant of the patent: **01.03.2017**
(21) Application number: 09425251.7
(22) Date of filing: 30.06.2009
(51) Int. Cl.: B60P 3/12

(54) **Wheel-lift assembly for wreckers**
Radhebeanordnung für Abschleppfahrzeuge
Système de remorquage par soulèvement des roues

(43) Date of publication of application: 05.01.2011
(73) Proprietor: Omars S.p.A., 12100 Cuneo (IT)
(72) Inventor: Andreis, Renato, 12100 Cuneo (IT)
(74) Representative: Robba, Pierpaolo

(56) References cited:
- AU-B2- 606 074
- CA-A1- 1 212 926
- US-A- 4 487 544
- US-A- 4 741 661
- US-A1- 2007 059 134

## Description

### Technical field

The present invention refers to broken-down vehicles rescuing and recovering. More specifically, the present invention relates to an equipment according to the preamble of claim 1.

### Background art

It is known in the art to use equipments of the above specified type, which are intended to be mounted on a breakdown vehicle, such as a tow truck. Such equipments typically employ a movable element which is displaceable between a raised position and a lowered position, and which includes a towing member swingable therefrom. The towing member is suitable to be conveniently moved in order to consent the broken-down vehicle loading and the subsequent transportation thereof, for instance towards a repair shop area to perform all the necessary actions so as to restore it to the working order.

These equipments generally have a first driving actuator, which cause the movable element to lower, and a second driving actuator which separately and independently cause the swinging movement of the towing member with respect to the movable element. This entails the drawback of using complex control systems in order to coordinate and synchronize in an effective way the operation of two separate actuator devices.

US-A-4 741 661 discloses an equipment according to the preamble of claim 1. In particular, this docunent discloses a vehicle mounted automobile "wheel lift" towing mechanism having a powder actuated lift boom vertically movable between raised and lowered positions along angularly inclined parallel tracks having cam members operable to impart predetermined vertical tilting movements to the boom; the latter at ground engagement being tiltable to conform to variations in ground slope; power actuation of the boom being responsive to extension and contraction of a horizontal lift cylinder assembly having a linearly movable piston. Manually operable wheel engaging apparatus, is carried by the lift boom for positively coupling a pair of vehicle wheels to the towing mechanism and includes a pair of pivotally movable wheel restraints operable to swing arcuately about vertical axes from positions laterally outwardly of adjacently opposed vehicle wheels to positions behind such wheels for restraining the latter against opposing wheels chocks.

AU 77453 87 A discloses a multi-function wrecker including an elongated vehicle chassis for support from the ground having front and rear ends, an elongated upright support member including upper and lower sections telescoped with respect to each other for relative extensible and retractable movement, first pivot means mounting said upper section from said rear end of said chassis for pivotal motion relative thereto about a first horizontal axis extending transversely of said chassis and said supper section at an elevation spaced above portions on the chassis, said upper section extending downwardly below said axis, said support member is pivotal between a generally vertical lowered position and a raised inclined position with the lower section swung outwardly and upwardly from said vehicle rear end, a combined lift and tow arm having a base and free end, angularly displaceable second pivot means mounting said base end from a slower portion of said lower section for pivotal motion relative thereto about a second horizontal axis expending transversely of said arm and lower section between first and second limit positions with said arm disposed at generally ninety degrees relative to said support member in said first limit position and said free end of said arm projecting outwardly of the rear end of said chassis when said arm is in said first limit position and said. arm disposed to the rear of and generally paralleling said support member when said arm is in said second limit position, the free end of said arm mounting a pair of lift means for engaging and lifting opposite side portions of a vehicle and spaced from the rear end of said chassis, first force means connected between said chassis and said upper section for swinging said support member between the lowered and raised position thereof, said first force means comprising an extensible cylinder connected to said support member at one end and to said chassis at the cylinder's extended distal end wherein said connections are positioned below said first pivot means.

CA-A1-1 212 926 discloses a vehicle wheel lift towing apparatus for mounting onto a rear portion of a tow truck is disclosed. The apparatus comprises a rigid lift beam with wheel lifts which are positionable beneath the disabled vehicle. The beam is pivotally connected to a lift which is vertically movable on a support secured to the rear of the tow truck. The lift is pivotally connected to the device which guides the vertical movement of the lift. The pivotal connections permits hinged movement of the lift beam towards the lift when the beam is swung onto a tow truck for storage. Such folding action of the towing apparatus provides compact storage and swinging movement of the beam beneath any obstructions on the tow truck, such as a tow sling arrangement.

### Summary of the invention

An object of the present invention is to provide an equipment of the above mentioned type, which permits to employ a single driving actuator device used to move both the movable element and the towing member.

A further object of the present invention is to provide an equipment of the above mentioned type, which at the same time is lightweight, works in a reliable and adaptable way for towing different vehicles, and is operable in an easy and quick manner.

These and other objects are achieved by the present invention according to an equipment of the above specified type and including the features set forth in the characterizing part of appended claim 1.

The present invention also relates to a breakdown vehicle according to claim 14.

### Brief description of the drawings

Further features and advantages of the present invention will be apparent from the following detailed description, given purely by way of non-limiting example, with reference to the appended drawings, in which:
- Figures 1 and 2 show a breakdown vehicle which comprises an exemplary embodiment of the equipment according to the present invention, wherein the equipment is in two different operating conditions;
- Figures 3 and 4 are a perspective view and respectively a lateral elevation view of the equipment shown in the preceding figures and portrayed in a trailing operating condition;

- Figures 5 to 8 are schematic lateral views which show the transition steps from a rest-operating condition to a trailing operating condition of the equipment illustrated in the preceding figures; and
- Figure 9 is a partial detailed view of a towing member belonging to the equipment shown in the preceding figures.

### Detailed description of the invention

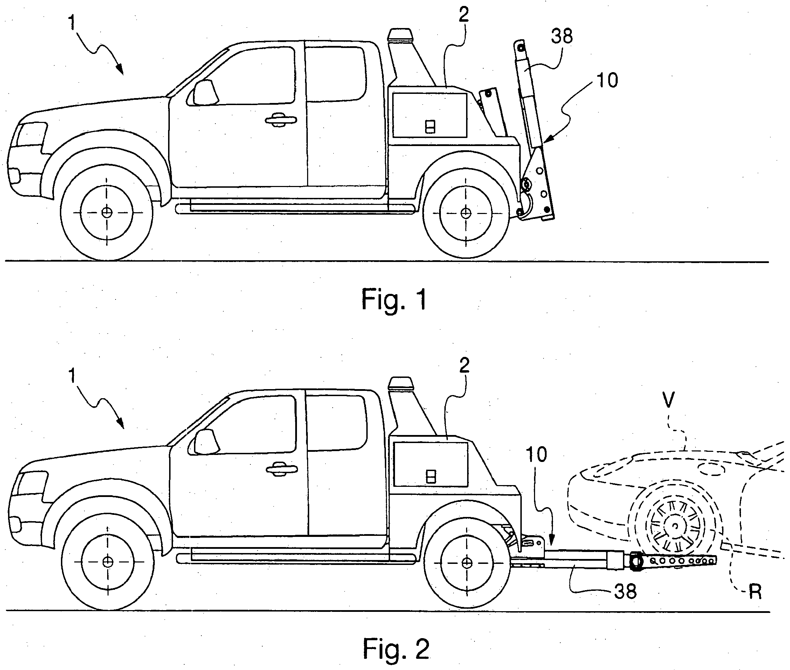

With reference to Figures 1 and 2, the numeral 1 indicates a breakdown vehicle provided with a chassis 2, on the back of which an exemplary embodiment of the equipment 10 according to the invention is mounted. As it will be apparent from the following description, the equipment 10 is suitable for rescuing and recovering broken-down vehicles. Preferably, the breakdown vehicle 1 is a tow truck.

In Figures 1 and 2 the breakdown vehicle 1 is shown in a rest-operating condition and in a trailing operation condition wherein it is destined to receive a broken-down vehicle V to be transported and which is indicated by a dotted-dashed line.

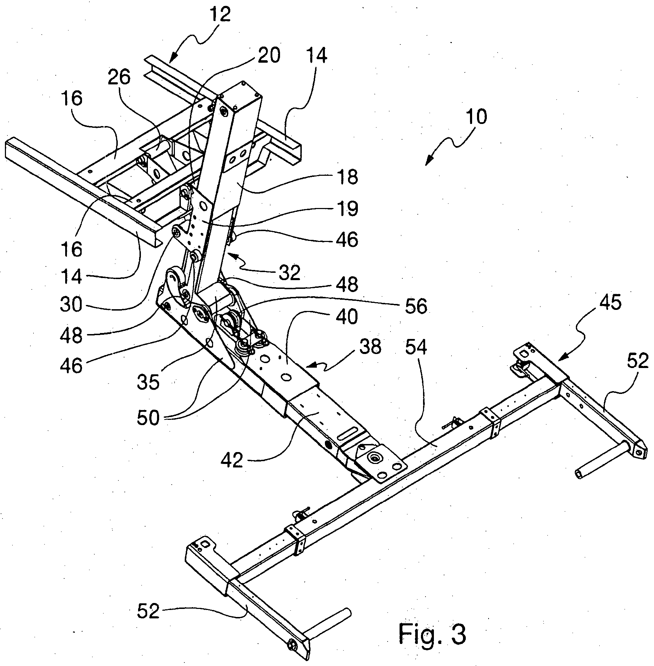

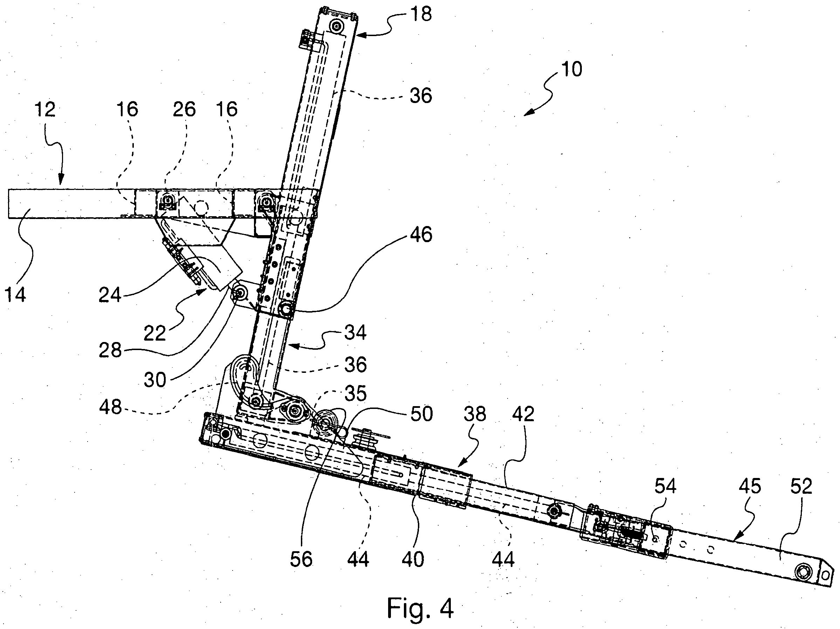

With reference in particular to Figures 3 and 4, the equipment 10 shown in Figures 1 and 2 is portrayed more in detail.

The equipment 10 comprises a support structure which is intended to be attached to the breakdown vehicle 1. Preferably, the support structure comprises a stationary frame 12 which is secured to the chassis 2 of the breakdown vehicle 1 in a manner known per se, for instance by clamps screwed on the chassis 2 (details not shown). In the embodiment shown, the stationary frame 12 comprises a couple of shaped metal profiled elements 14 having a C-shape and being transversally connected therebetween by a further couple of metal beams 16.

Preferably, the support structure further comprises a tiltable element 18 which is swingably mounted with respect to the stationary frame 12. As an example, the tiltable element 18 is horizontally hinged on one of metal beams 16 by interposing a first pin 20 (visible in Figure 3). According to the embodiment shown, the tiltable element 18 is hollow and has a box-shaped section which is opened at its bottom and closed at its top. The tiltable element 18 has at its opposite sides a couple of plate-like projections 21 which extend beyond the opened bottom of such tiltable element 18. The plate-like projections 21 are attached to the tiltable element 18 in a manner known per se, e.g. by screwing.

Optionally, with reference to Figure 4, a tilt actuator device 22 known per se is located between the stationary frame 12 and the tiltable element 18 and is intended to adjust the relative inclination between the tiltable element 18 and the stationary frame 12. For instance, the tilt actuator device 22 is a fluidic cylinder, in particular is double-acting and uses oil as hydraulic fluid. In the embodiment shown, the tilt actuator device 22 has a hollow body 24, which is horizontally hinged at a second pin 26 mounted on one of the transverse beams 16, and a piston 28 (only visible in Figure 4), which in turn is horizontally hinged on a second pin 30 mounted on a couple of plates 32 screwed on the plate-like projections 19 and connected at opposite sides of the tiltable element 18.

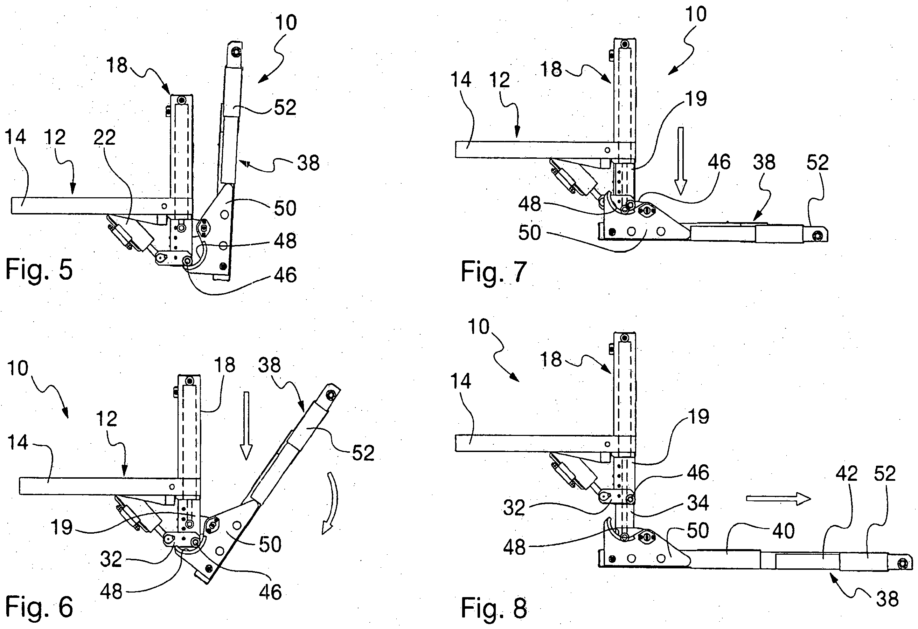

The equipment 10 further comprises a movable element 34 displaceable with respect to the support structure between a raised position (see Figure 5) and a lowered position (see Figures 3, 4 and 8)). In the embodiment shown, the movable element 34 is mounted in a telescopic manner on the support structure. Preferably, the movable element 34 is mounted in a displaceable manner on the tiltable element 18. More preferably, the movable element 34 has a smaller transverse cross-section than that of the tiltable element 18 and is telescopically mounted thereon. As an example, the movable element 34 is box-shaped with a substantially rectangular transverse cross-section and has an opened top and a closed bottom. Preferably, the movable element 34 has a bottom protrusion or foot-like portion 35 which projects outwardly according to a direction which is perpendicular to the direction connecting the couple of plate-like projections 21.

With reference to Figure 4, the equipment 10 further comprises a driving actuator device 36 (indicated by dashed lines) arranged for controlling the motion of the movable element 34 with respect to the support structure. For instance, the driving actuator device 36 is a fluidic cylinder, particularly but not necessarily a double-acting cylinder which uses oil as hydraulic fluid.

In the embodiment shown, the driving actuator device 36 is located into the region defined between the closed top of the tiltable element 18 and the closed bottom of the movable element 34. Preferably, with reference in particular to Figure 4, the piston of the driving actuator device 36 is connected to the foot-like portion 35 with projects from the bottom of the movable element 34.

The equipment 10 further comprises a towing member 38 intended to carry the broken-down vehicle V. The towing member 38 is locked translationally to said movable element 34 and swingable thereto. As it can be seen in Figures 5 to 8 and as it will be made clear below in the present description, the towing member 38 is swingable between a angularly withdrawn position (Figures 1 and 5) and an angularly tilted-out position (Figures 2 and 8) with respect to the movable element 34. Preferably the towing member 38 has an elongated arm-like shape.

In the embodiment shown, the towing member 38 comprises a proximal section 40 locked translationally to said movable element 34 and swingable thereto, and a distal section 42 provided with a trailing device 45 which is intended to receive the broken-down vehicle V and to be connected thereto. Preferably an end of the proximal section 40 is hinged to the movable element 34, for example to the transversally projecting end of the foot-like portion 35. Conveniently the hinge axis of the proximal section 40 is substantially perpendicular to the displacement direction of the movable element 34. In the embodiment shown, the distal section 42 is mounted displaceable in an adjustable manner to the proximal section 40. Preferably, the proximal section 40 and the distal section 42 are mounted one to the other in a telescopic manner. For instance, the proximal section 40 has a larger cross-section and the distal section 42 has a smaller cross-section, in such a way to penetrate and slide one into the other. Preferably, both the proximal section 40 and the distal section 42 are box-shaped and have a substantially rectangular transverse cross-section.

As it can be seen in Figure 4, the equipment 10 preferably comprises a further adjusting actuator device 44 intended to control the motion of the distal section 42 with respect to the proximal section 42. In a similar way to what described above in connection with the driving actuator device 36, the adjusting actuator device 44 is located in a region defined between the closed bottom of the proximal section 40 and the respective closed bottom of the distal section 42. Preferably, the adjusting actuator device 44 is a fluidic cylinder, particularly a double-acting cylinder which uses oil as hydraulic fluid.

According to the present invention, the support structure has a guide device and the towing member 38 has a corresponding guided portion which cooperates with the guide device. As it will be made clear below in the description, the guide device and the guided portion cooperate in such a manner to impart a controlled swinging movement to the towing member 38 with respect to the movable element 34 during at least a section of the path to be travelled by such movable element 34 between the lowered position and the raised position. Owing to this combination of features, the displacement of the movable element 34 and of the towing member 38 is operated by the single driving actuator device 36.

Preferably, as it will be made clear below, the guided portion cooperates with the guide device and comes into contact therewith only in a section of the path to be travelled by the movable element 34, for instance when it is in the proximity of raised position. Due to this feature, if the contact between the guide device and the guided portion occurs only in a section of the path to be travelled by the movable element, their mechanical wear will be limited.

In a preferred manner, the guided portion cooperates with the guide device by rolling. Owing to this characteristic, the friction between the guide device and the guided portion is minimised, reducing their mechanical wear.

In the embodiment shown, the guide device comprises a first roller 46 mounted rotatable about its axis on the support structure, while the guided portion comprises a first shaped profile carried by the towing member 38.

Preferably the roller 46 is mounted on the tiltable element 18. More preferably the roller 46 is mounted on one of the plates 32 and has a rotation axis which is substantially perpendicular to the displacement direction of the movable element 34 and substantially parallel to the hinge axis of the towing member 38 with respect to such movable element 34.

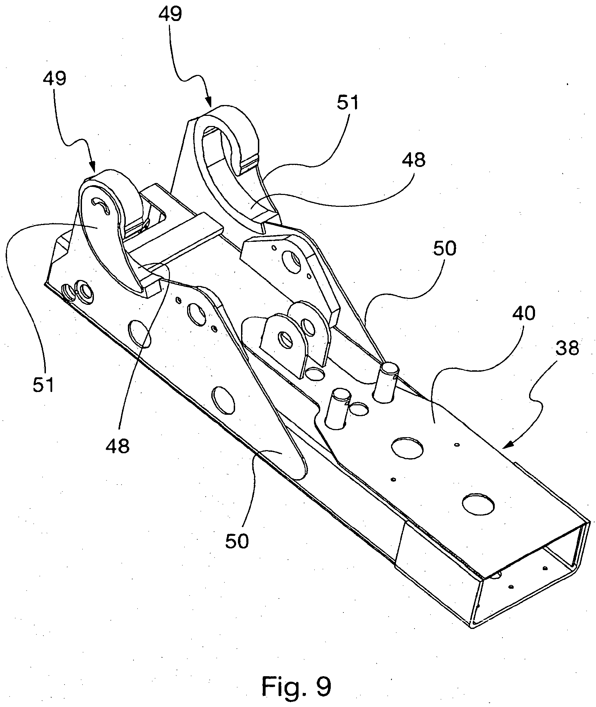

With reference to Figure 9, the first shaped profile 48 is preferably defined by the running surface of a rail or track 49 carried by the towing member 38. In the embodiment shown, the rail or track 49 is laterally mounted on the towing member 38, at the same side onto which the roller 46 is attached. For instance, the rail or track 49 is mounted on a plate-like sheet 51 laterally attached to the towing member 38, at the same side onto which the roller 46 is fitted. Conveniently, the rail or track 49 has a groove (not shown) which locks a border of the plate-like sheet 50.

Preferably, the shaped profile 48 defined by the rail or track 49 provides a running surface having a substantially curvilinear shape, for instance a shape of a spiral section which wounds itself about an axis substantially parallel to the rotation axis of the towing member 38. The curvilinear shape of the running surface provided by the shaped profile 48 (and in particular the above-mentioned spiral section shape) has the advantage to impart to the towing member 38 a particularly smooth and regular motion.

Such spiral section is intended to be run along by the roller 46. In an optional manner the rail or track 48 is laterally outwardly closed, with respect to the towing member 38, by a further cover plate 51. Such feature has the advantage to prevent dust or external elements to access into the concave seat defined by the rail or track 49.

In the embodiment shown, the equipment 10 further includes a second roller 46 and respectively a second shaped profile 48. The rollers 46 are preferably located on opposite sides of the movable element 34 and the shaped profiles 48 are accordingly located on opposite sides of the towing member 38. The construction of the second roller 46 and the second shaped profile 48 substantially replicates what has been described above.

Preferably the trailing device 45 has an arrangement which is substantially fork-shaped. In the embodiment shown, the trailing device 45 comprises a central body from which two lateral appendices 52 spread out, and which is connected to the distal section 42. Preferably, the central body comprises a bar 54 arranged transversally on the distal section 42. More preferably, the distal section 42 is hinged at a middle portion of the bar 54. Conveniently, the hinge axis between the distal section 42 and the bar 54 is substantially perpendicular to the displacement axis of the distal section 42 with respect to the proximal section 40.

In a preferred manner, the lateral appendices 52 are mounted laterally translatable with respect to the central body. As an example, the lateral appendices 52 have a C-shape. In the embodiment shown, the lateral appendices 52 are mounted on the bar 54 in a telescopic manner, e.g. one end branch of the C penetrating into the central body or bar 54 in an adjustable manner. In a further advantageous manner, the frontal projection of the lateral appendices 52 can also be adjusted. For instance, they can include a telescopic mechanism as well.

With reference in particular to Figure 5 to 7, the operation of the equipment 10 according to the present invention will be hereinafter described.

In Figure 5, the equipment 10 is shown with the towing member 38 arranged in an angularly withdrawn position, wherein it is preferably substantially upright, and with the movable element 34 arranged in a raised position. The equipment 10 is arranged thus in a minimum occupied-space configuration, which corresponds to the rest-operating condition pertaining to the breakdown vehicle V and shown in Figure 1. In this configuration, it can be noted that the rollers 46 are into contact with the shaped profiles 48.

In Figure 6 the equipment 10 is shown during a first stage of the transition of the towing member 38 from the angularly withdrawn position to an angularly tilted-out position (shown in Figure 8). After having adjusted, if appropriate, the inclination of the tiltable element 18 by means of the tilt actuator device 22, in this first stage the driving actuator device 36 is operated in such a manner that the movable element 32 displaces along an initial section of its path to be travelled towards the lowered position. As a consequence, in this initial section of the path to be travelled, the rollers 46 move the shaped profiles 48 in a clockwise direction according to a viewer observing Figure 6, making the towing member 38 to displace towards the angularly tilted-out position. In such a manner, the cooperation between the rollers 46 and the shaped profiles 48 preferably occurs in the proximity of the raised position, i.e. during the initial section of the path to be travelled by the movable element 34 from the raised position to the lowered position.

Figure 7 shows the equipment 10 after the initial section of the path to be travelled by the movable element 34 between the lowered position and the raised position has been completed. At this stage the rollers 46 have ended their contact with the shaped profiles 48 and the towing member 38 is in the angularly tilted-out position, wherein it is preferably positioned orthogonally to the movable element 34.

Figure 8 shows the equipment 10 when the movable element 34 has entirely completed its path to be travelled and has reached its lowered position, which corresponds to the trailing operating configuration shown in Figure 2. In the final section of the path to be travelled, during the transition between the condition shown in Figure 7 and the condition shown in Figure 8, the rollers 46 are not anymore into contact with the shaped profiles 48.

With reference again to Figure 8, it can be noted that the lateral appendices 52 of the trailing device 45 have been telescopically extracted in order to adapt to the size of the wheels R of the broken-down vehicle V to be carried and trailed. At this stage the lateral appendices 52 of the trailing device can load and support the broken-down vehicle V, by dragging it either by means of a winch 54 provided, if appropriate, on the equipment 10 e.g. attached on the towing member 38, or by using the engine of the vehicle V itself. As an example, the wheels R of the vehicle V are secured to the trailing device 45 by means of belts and/or anchoring chains (both not shown).

To bring the trailing device 38 from the angularly tilted-out position back to the angularly withdrawn position, the same stages above discussed and illustrated with reference to Figures 5 to 8 are carried out, but performed in reversed order. In particular, it can be noted that the cooperation between the guide device, including the rollers 46, and the guided portion, including the shaped profiles 48, preferably occurs again in the proximity of the raised position of the movable element 34; in this case it occurs only in the final section of the path to be travelled by the movable element 34 from the lowered position to the raised position.

According to variants of embodiment not shown, the guide device and the guided portion can be made in a different way from what has been illustrated in the above-discussed embodiment. For instance, as it is evident to the skilled man, the arrangement between the rollers 46 and the shaped profiles 48 can be inverted in such a manner that the guide device is provided with the shaped profiles and instead the towing member is provided with the rollers.

Naturally, the principle of the invention remaining the same, the embodiments and constructional details may be widely varied with respect to that described and illustrated, purely by way of a non-limiting example, without thereby departing from the scope of the invention as defined in the accompanying claims.

### Alphanumeric references

- V: Broken-down vehicle
- 1: Breakdown vehicle
- 2: Chassis of the breakdown vehicle
- 10: Equipment
- 12: Stationary frame
- 14: Metal profiled elements
- 16: Metal profiled beams
- 18: Tiltable element
- 20: First (hinge) pin
- 21: Plate-like projections of the tiltable element
- 22: (First) tilt actuator device
- 24: Hollow body
- 26: Second (hinge) pin
- 28: Piston
- 30: Third (hinge) pin
- 32: Plates
- 34: Movable element
- 35: Foot-like portion of the movable element
- 36: (Second) driving actuator device
- 38: Towing member
- 40: Proximal section
- 42: Distal section
- 44: (Third) adjusting actuator device
- 45: Trailing device
- 46: Rollers
- 48: Shaped profiles
- 49: Tracks or rails
- 50: Plate-like sheet
- 51: Cover plate
- 52: Lateral appendices
- 54: Bar
- 56: Winch

## Claims

1. Breakdown and recovery equipment (10) for rescuing broken-down vehicles (V), which is intended to be mounted on a breakdown vehicle (1); said equipment (10) comprising:
- a support structure (12, 14, 16, 18) intended to be attached to the chassis (2) of said breakdown vehicle (1);
- a movable element (34) mounted in a displaceable manner on said support structure (12, 14, 16, 18) between a raised position and a lowered position;
- a towing member (38) suitable for carrying a broken-down vehicle (V), locked translationally to said movable element (34) and swingable thereto between an angularly tilted-out position and an angularly withdrawn position; and
- a driving actuator device (36) associated to said movable element (34) and arranged to control the motion thereof;
wherein said support structure (12, 14, 16, 18) has guide means (46) and in that said towing member (38) has a corresponding guided portion (48) cooperating with said guide means (46) in such a manner to impart a controlled swinging movement to said towing member (38) with respect to said movable element (34) during at least a section of the path to be travelled by said movable element (34) between said lowered position and said raised position;
wherein said guided portion (48) cooperates with said guide means (46) by rolling; and
wherein the group formed by said guide means and said guided portion comprises at least one roller (46) and at least one associated shaped profile (48); said at least one roller (46) being intended to come into contact with said at least one shaped profile (48) in such a way to cause the swinging movement of said towing member (38);
said equipment being **characterised in that** said at least one shaped profile (48) defines a running surface having a substantially curvilinear shape.

2. Equipment according to claim 1, wherein said guided portion (48) cooperates with said guide means (46) and comes into contact therewith only in a section of the path to be travelled by said movable element (34).

3. Equipment according to claim 1 or 2, wherein said at least one roller (46) belongs to the guide means and is attached to the support structure (12, 14, 16, 18) while being free to rotate about its axis, and said at least one shaped profile (48) belongs to the guided portion and is attached to the towing member (38).

4. Equipment according to any of the preceding claims, wherein said guide means comprise a couple of rollers (46) located on opposite sides of the movable element (34) and intended to come into contact with associated shaped profiles (48) carried by said towing member (38) and located on opposite sides of said towing member (38).

5. Equipment according to any of the preceding claims, wherein said at least one shaped profile (48) defines a running surface having substantially the shape of a spiral section.

6. Equipment according to any of the preceding claims, wherein said movable element (34) is telescopically mounted on said support structure (12, 14, 16, 18).

7. Equipment according to any of the preceding claims, wherein said support structure comprises a stationary frame (12) intended to be secured to the chassis (2) of a breakdown vehicle (1), and a tiltable element (18) movable with respect to said stationary frame (12) and onto which said movable element (34) is mounted in a displaceable manner.

8. Equipment according to claim 7, wherein a further actuator device (22), which is intended to adjust the relative inclination between said tiltable element (18) and said stationary frame (12), is located between said stationary frame (12) and said tiltable element (18).

9. Equipment according to any one of the preceding claims, wherein said towing member (38) comprises a proximal section (40) locked translationally to said movable element (34) and swingable thereto, and a distal section (42) provided with a trailing device (45) which is to be used with said broken-down vehicle (V) and is mounted displaceable in an adjustable manner to said proximal section (40).

10. Equipment according to claim 9, wherein said proximal section (40) and said distal section (42) are mounted one to the other in a telescopic manner.

11. Equipment according to any of the preceding claims, wherein said towing member (38) comprises a trailing device (45) rotatably mounted to the remainder of said towing member (38).

12. Breakdown vehicle (1) comprising a chassis (2) onto which the stationary frame (12) belonging to an equipment (10) according to any one of the preceding claims is mounted.

## Patentansprüche

1. Pannenhilfs- und Bergungsausrüstung (10) zum Bergen liegengebliebener Fahrzeuge (V), die dazu vorgesehen ist, an einem Pannenhilfsfahrzeug (1) befestigt zu werden; wobei die Ausrüstung (10) umfasst:
- eine Trägerstruktur (12, 14, 16, 18), die dazu vorgesehen ist, am Fahrgestell (2) des Pannenhilfsfahrzeugs (1) befestigt zu werden;
- ein bewegliches Element (34), das zwischen einer angehobenen Stellung und einer abgesenkten Stellung auf verlagerbare Weise an der Trägerstruktur (12, 14, 16, 18) befestigt ist;
- ein Abschleppelement (38), das zum Tragen eines liegengebliebenen Fahrzeugs (V) geeignet ist, translatorisch mit dem beweglichen Element (34) verriegelt ist und bezüglich desselben zwischen einer winklig ausgeklappten Stellung und einer winklig eingezogenen Stellung schwenkbar ist; und
- eine Antriebsaktuatorvorrichtung (36), die dem beweglichen Element (34) zugeordnet und dazu angeordnet ist, die Bewegung desselben zu steuern;
wobei die Trägerstruktur (12, 14, 16, 18) Führungsmittel (46) aufweist und dadurch, dass das Abschleppelement (38) einen entsprechenden geführten Abschnitt (48) aufweist, der mit den Führungsmitteln (46) derart zusammenwirkt, um das Abschleppelement (38) während mindestens eines Abschnitts des durch das bewegliche Element (34) zurückzulegenden Weges zwischen der abgesenkten Stellung und der angehobenen Stellung eine gesteuerte Schwenkbewegung bezogen auf das bewegliche Element (34) vollziehen zu lassen;
wobei der geführte Abschnitt (48) mit den Führungsmitteln (46) durch Rollen zusammenwirkt; und wobei die Gruppe, die durch die Führungsmittel und den geführten Abschnitt ausgebildet wird, mindestens eine Rolle (46) und mindestens ein zugeordnetes geformtes Profil (48) umfasst; wobei die mindestens eine Rolle (46) dazu vorgesehen ist, derart in Kontakt mit dem mindestens einen geformten Profil (48) zu gelangen, um die Schwenkbewegung des Abschleppelements (38) zu bewirken;
wobei die Ausrüstung **dadurch gekennzeichnet ist, dass** das mindestens eine geformte Profil (48) eine Lauffläche definiert, die eine im Wesentlichen krummlinige Form aufweist.

2. Ausrüstung nach Anspruch 1, wobei der geführte Abschnitt (48) mit den Führungsmitteln (46) zusammenwirkt und mit denselben nur in einem Abschnitt des durch das bewegliche Element (34) zurückzulegenden Weges in Kontakt gelangt.

3. Ausrüstung nach Anspruch 1 oder 2, wobei die mindestens eine Rolle (46) zu den Führungsmitteln gehört und an der Trägerstruktur (12, 14, 16, 18) befestigt ist, während sie sich ungehindert um ihre Achse drehen kann, und das mindestens eine geformte Profil (48) zu dem geführten Abschnitt gehört und an dem Abschleppelement (38) befestigt ist.

4. Ausrüstung nach einem der vorhergehenden Ansprüche, wobei die Führungsmittel ein Paar Rollen (46) umfassen, die sich auf gegenüberliegenden Seiten des beweglichen Elements (34) befinden und dazu vorgesehen sind, in Kontakt mit zugeordneten geformten Profilen (48) zu gelangen, die durch das Abschleppelement (38) getragen werden und sich auf gegenüberliegenden Seiten des Abschleppelements (38) befinden.

5. Ausrüstung nach einem der vorhergehenden Ansprüche, wobei das mindestens eine geformte Profil (48) eine Lauffläche definiert, die im Wesentlichen die Form eines Spiralabschnitts aufweist.

6. Ausrüstung nach einem der vorhergehenden Ansprüche, wobei das bewegliche Element (34) teleskopisch an der Trägerstruktur (12, 14, 16, 18) befestigt ist.

7. Ausrüstung nach einem der vorhergehenden Ansprüche, wobei die Trägerstruktur einen ortsfesten Rahmen (12), der dazu vorgesehen ist, am Fahrgestell (2) eines Pannenhilfsfahrzeugs (1) befestigt zu werden, und ein klappbares Element (18), das bezogen auf den ortsfesten Rahmen (12) beweglich ist und auf dem das bewegliche Element (34) auf verlagerbare Weise befestigt ist, umfasst.

8. Ausrüstung nach Anspruch 7, wobei eine weitere Aktuatorvorrichtung (22), die dazu vorgesehen ist, die relative Neigung zwischen dem klappbaren Element (18) und dem ortsfesten Rahmen (12) einzustellen, sich zwischen dem ortsfesten Rahmen (12) und dem klappbaren Element (18) befindet.

9. Ausrüstung nach einem der vorhergehenden Ansprüche, wobei das Abschleppelement (38) einen proximalen Abschnitt (40), der translatorisch mit dem beweglichen Element (34) verriegelt und bezüglich desselben schwenkbar ist, und einen distalen Abschnitt (42), der mit einer Nachlaufvorrichtung (45) versehen ist, die mit dem liegengebliebenen Fahrzeug (V) zu benutzen und auf einstellbare Weise verlagerbar an dem proximalen Abschnitt (40) befestigt ist, umfasst.

10. Ausrüstung nach Anspruch 9, wobei der proximale Abschnitt (40) und der distale Abschnitt (42) auf teleskopische Weise aneinander befestigt sind.

11. Ausrüstung nach einem der vorhergehenden Ansprüche, wobei das Abschleppelement (38) eine Nachlaufvorrichtung (45) umfasst, die drehbar am Rest des Abschleppelements (38) befestigt ist.

12. Pannenhilfsfahrzeug (1), das ein Fahrgestell (2) umfasst, auf dem der ortsfeste Rahmen (12), der zu einer Ausrüstung (10) nach einem der vorhergehenden Ansprüche gehört, befestigt ist.

## Revendications

1. Équipement de dépannage et de récupération (10) pour secourir des véhicules en panne (V), qui est destiné à être monté sur un véhicule de dépannage (1) ; ledit équipement (10) comprenant :
- une structure de support (12, 14, 16, 18) destinée à être fixée au châssis (2) dudit véhicule de dépannage (1) ;
- un élément mobile (34) monté d'une manière déplaçable sur ladite structure de support (12, 14, 16, 18) entre une position surélevée et une position abaissée ;
- un élément de remorquage (38) approprié pour porter un véhicule en panne (V), verrouillé en translation sur ledit élément mobile (34) et apte à se balancer par rapport à celui-ci entre une position angulairement inclinée à l'extérieur et une position angulairement rentrée ; et
- un dispositif actionneur d'entraînement (36) associé audit élément mobile (34) et agencé pour commander le mouvement de celui-ci ;
ladite structure de support (12, 14, 16, 18) ayant des moyens de guidage (46) et ledit élément de remorquage (38) ayant une partie guidée correspondante (48) coopérant avec lesdits moyens de guidage (46) de façon à communiquer un mouvement de balancement contrôlé audit élément de remorquage (38) par rapport audit élément mobile (34) pendant au moins une section du trajet à parcourir par ledit élément mobile (34) entre ladite position abaissée et la disposition surélevée ;
ladite partie guidée (48) coopérant avec lesdits moyens de guidage (46) par roulement ; et
le groupe formé par lesdits moyens de guidage et ladite partie guidé comprenant au moins un rouleau (46) et au moins un profil façonné associé (48) ; ledit au moins un rouleau (46) étant destiné à venir en contact avec ledit au moins un profil façonné (48) de façon à entrainer le mouvement de balancement dudit élément de remorquage (38) ;
ledit équipement étant **caractérisé par le fait que** ledit au moins un profil façonné (48) définit une surface de déplacement ayant une forme sensiblement curviligne.

2. Équipement selon la revendication 1, dans lequel ladite partie guidée (48) coopère avec lesdits moyens de guidage (46) et entre en contact avec ceux-ci uniquement dans une section du trajet à parcourir par ledit élément mobile (34).

3. Équipement selon la revendication 1 ou 2, dans lequel ledit au moins un rouleau (46) appartient aux moyens de guidage et est fixé à la structure de support (12, 14, 16, 18) tout en étant libre de tourner autour de son axe, et ledit au moins un profil façonné (48) appartient à la partie guidée et est fixé à l'élément de remorquage (38).

4. Équipement selon l'une quelconque des revendications précédentes, dans lequel les moyens de guidage comprennent un couple de rouleaux (46) situés sur des côtés opposés de l'élément mobile (34) et destinés à venir en contact avec des profils façonnés associés (48) portés par ledit élément de remorquage (38) et situés sur des côtés opposés dudit élément de remorquage (38).

5. Équipement selon l'une quelconque des revendications précédentes, dans lequel ledit au moins un profil façonné (48) définit une surface de déplacement ayant sensiblement la forme d'une section de spirale.

6. Équipement selon l'une quelconque des revendications précédentes, dans lequel ledit élément mobile (34) est monté de manière télescopique sur ladite structure de support (12, 14, 16, 18).

7. Équipement selon l'une quelconque des revendications précédentes, dans lequel ladite structure de support comprend un cadre immobile (12) destiné à être fixé au châssis (2) d'un véhicule de dépannage (1), et un élément inclinable (18) mobile par rapport audit cadre immobile (12) et sur lequel ledit élément mobile (34) est monté d'une manière déplaçable.

8. Équipement selon la revendication 7, dans lequel un dispositif actionneur supplémentaire (22), qui est destiné à ajuster l'inclinaison relative entre ledit élément inclinable (18) et ledit cadre immobile (12), est situé entre ledit cadre immobile (12) et ledit élément inclinable (18).

9. Équipement selon l'une quelconque des revendications précédentes, dans lequel ledit élément de remorquage (38) comprend une section proximale (40) verrouillée en translation sur ledit élément mobile (34) et apte à se balancer par rapport à celui-ci, et une section distale (42) munie d'un dispositif traînant (45) qui est doit être utilisé avec ledit véhicule en panne (V) et est monté déplaçable d'une manière ajustable sur ladite section proximale (40).

10. Équipement selon la revendication 9, dans lequel ladite section proximale (40) et ladite section distale (42) sont montées l'une à l'autre de manière télescopique.

11. Équipement selon l'une quelconque des revendications précédentes, dans lequel ledit élément de remorquage (38) comprend un dispositif traînant (45) monté de façon rotative sur le reste dudit élément de remorquage (38).

12. Véhicule de dépannage (1) comprenant un châssis (2) sur lequel le cadre immobile (12) appartenant à un équipement (10) selon l'une quelconque des revendications précédentes est monté.
